# EUROPÄISCHE PATENTANMELDUNG

(11) **EP 3 378 300 A1**
(43) Veröffentlichungstag der Anmeldung: **26.09.2018**
(21) Anmeldenummer: 18401028.8
(22) Anmeldetag: 12.03.2018
(51) Int. Cl.: A01B 79/00, A01C 17/00

(54) **LANDTECHNISCHES MASCHINENSYSTEM**

(30) Priorität: 15.03.2017 DE 102017105495
(71) Anmelder: Amazonen-Werke H. Dreyer GmbH & Co. KG, 49205 Hasbergen (DE)
(72) Erfinder: Konermann, Thomas, 49479 Ibbenbüren (DE); Nienstermann, Heinke, 49078 Osnabrück (DE); Käller, Michael, 49324 Melle (DE)

(57) **Zusammenfassung**

Landtechnisches Maschinensystem mit einem Terminal (10) zur Steuerung einer landtechnischen Maschine (1), wobei das Terminal (10) über einen berührungsempfindlichen Bildschirm (11) zur Eingabe von Parameterwerten zur Ermittlung von Betriebsparametern der landtechnischen Maschine (1) verfügt, wobei die landtechnische Maschine (1) über zumindest einen Aktor (8) zur Anpassung des Arbeitsergebnisses der landtechnischen Maschine (1) verfügt, wobei bei der Auswahl eines Parameterfeldes für die Eingabe eines Parameterwertes eine Rechenmaske (12, 21) auf dem Bildschirm (11) des Terminals (10) eingeblendet wird, so dass das Terminal den einzugebenden Parameterwert wahlweise mittels einer mathematischen Operation zwischen zwei oder mehr einzugebenden Zahlenwerten ermittelt und dass das Terminal (10) und/oder ein mit diesem verbundener Jobrechner (13) den zumindest einen Aktor (8) in Abhängigkeit des ermittelten Parameterwertes zur Einstellung von zumindest einem Betriebsparameter ansteuert.

## Beschreibung

Die Erfindung betrifft ein landtechnisches Maschinensystem gemäß dem Oberbegriff des Patentanspruches 1.

Ein derartiges landwirtschaftliches Maschinensystem, umfassend ein Terminal mit einem berührungsempfindlichen Bildschirm zur Eingabe von Parameterwerten und zumindest einem Aktor zur Anpassung des Arbeitsergebnisses in Abhängigkeit des Parameterwertes ist allgemein bekannt und beispielsweise durch die EP2687923A2 offenbart.

Die einzugebenden Parameterwerte werden hierbei oftmals durch Kombination verschiedener Zahlenwerte ermittelt. Das Arbeitsergebnis bei einer Sämaschine wird beispielsweise durch die pro Fläche ausgebrachte Menge an Körnern definiert. Dieser Wert hängt insbesondere von der anzubauenden Frucht ab. Die Sämaschine wird jedoch üblicherweise über die auszubringende Masse kalibriert, wobei der Umrechnungsfaktor hier das sogenannte Tausendkorngewicht ist, also die Masse von tausend Körnern der verwendeten Saatgutsorte.

Auch ist es bekannt bei einer Feldspritze die verwendeten Durchflussmengenzähler zu kalibrieren. Dies kann beispielsweise bei der Inbetriebnahme der Feldspritze notwendig sein oder wenn die Kalibrierung durch Verschleiß oder sonstige Veränderungen an der Maschine nicht mehr den aktuellen Gegebenheiten entspricht. Eine entsprechende Eingabe der Kalibrierung ist üblicherweise an einem Terminal zum Betrieb einer Feldspritze vorgesehen. Hierfür muss bei einem bekannten Druck die beförderte Flüssigkeitsmenge an den Spritzdüsen oder einer sonstigen geeigneten Position der Feldspritze aufgefangen werden. Die beförderte Menge an Flüssigkeit pro Zeit kann dann typischerweise in das Terminal eingegeben werden, um eine Anpassung der Kalibrierung vorzunehmen. Weitere Beispiele für eine Anpassung von Betriebsparametern bei landwirtschaftlichen Arbeitsmaschinen sind allgemein bekannt.

Nachteilig an den bekannten landwirtschaftlichen Maschinensystemen ist, dass vor der Eingabe der Parameterwerte in das Terminal diese erst umständlich aus mehreren bekannten Zahlenwerten berechnet werden müssen, was zu einem zusätzlichen Zeitaufwand für den Landwirt führt.

Aufgabe der vorliegenden Erfindung ist es, ein landtechnisches Maschinensystem bereitzustellen, welches die Nachteile des Standes der Technik behebt.

Diese Aufgabe wird durch den kennzeichnenden Teil des Anspruchs 1 gelöst. Es ist also vorgesehen, bei der Auswahl eines Parameterfeldes für die Eingabe eines Parameterwertes eine Rechenmaske auf dem Bildschirm des Terminals einzublenden, so dass das Terminal den einzugebenden Parameterwert wahlweise mittels einer mathematischen Operation zwischen zwei oder mehr einzugebenden Zahlenwerten ermittelt und dass das Terminal und/oder ein mit diesem verbundener Jobrechner den zumindest einen Aktor in Abhängigkeit des ermittelten Parameterwertes zur Einstellung von zumindest einem Betriebsparameter ansteuert. Das Terminal bietet also bei der Eingabe von Parameterwerten die Möglichkeit diese mittels einer mathematischen Operation aus mehreren Zahlenwerten zu berechnen. Wahlweise meint in diesem Zusammenhang, dass auch lediglich ein Zahlenwert direkt als Parameterwert eingegeben werden kann. Es besteht jedoch immer die Wahlmöglichkeit den Parameterwert auch als Kombination aus mehreren Zahlenwerten einzugeben, indem die Zahlenwerte durch eine auszuwählende mathematische Operation verrechnet werden. Bei der mathematischen Operation kann es sich beispielsweise um eine Addition, Subtraktion, Division und/oder Multiplikation handeln. Weitere mathematische Operationen sind denkbar.

Nach der Ermittlung des gewünschten Ergebnisses kann der Bediener des Terminals dieses Vorzugsweise durch die Betätigung eines entsprechenden Feldes als Parameterwert übernehmen. Die Berechnung ist damit abgeschlossen. Das Terminal übermittelt diesen Parameterwert anschließend oder zu einem späteren Zeitpunkt an einen Jobrechner zur weiteren Ansteuerung der landtechnischen Maschine. Alternativ ist das Terminal direkt mit der landtechnischen Maschine verbunden und steuert diese. Der Parameterwert wird durch das Terminal oder den Jobrechner verwendet, zumindest einen Aktor an der landtechnischen Maschine anzusteuern, um zumindest einen Betriebsparameter entsprechend des ermittelten Parameterwertes einzustellen. Bei dem Betriebsparameter kann es sich insbesondere um eine Ausbringmenge und/oder Ausbringrate handeln. Andere Betriebsparameter, wie Arbeitstiefe, Arbeitsbreite, Arbeitshöhe oder andere sind denkbar. Der jeweilige Parameterwert wird jeweils nach der Ermittlung in einem Speicher des Terminals und/oder des Jobrechners zur weiteren Verwendung gespeichert. Ein derartiges landtechnisches Maschinensystem erlaubt es dem Benutzer besonders komfortabel und zeitsparend die für die Einstellung der Betriebsparameter notwendigen Parameterwerte zu ermitteln und einzugeben.

In einer vorteilhaften Weiterbildung der Erfindung ist das landwirtschaftliche Maschinensystem derart ausgebildet, dass durch das Terminal anhand des ermittelten Parameterwertes zumindest ein Sensor an der landtechnischen Maschine kalibriert wird und das Terminal und/oder der Jobrechner in Reaktion auf die Messwerte des Sensors den zumindest einen Aktor zur Einstellung von zumindest einem Betriebsparameter ansteuert. Auf diese Weise kann der Benutzer die Kalibrierung von Sensoren an der landtechnischen Maschine besonders komfortabel und zeitsparend durchführen. Die Verarbeitung der Messwerte des Sensors durch das Terminal und/oder den Jobrechner hängt direkt von dessen Kalibrierung ab. Die Ansteuerung durch das Terminal und/oder den Jobrechner des zumindest einen Aktors erfolgt in Reaktion auf die mittels des Sensors ermittelten Werte, welche anhand der Kalibrierung des Sensors durch das Terminal und/oder den Jobrechner ausgewertet werden, so dass auch in diesem Fall die Ansteuerung des Aktors in Abhängigkeit des ermittelten Parameterwertes, welcher ja die Kalibrierung des Sensors bestimmt, durchgeführt wird.

In einer vorteilhaften Weiterbildung der Erfindung ist vorgesehen, dass durch eine Betätigung eines eingeblendeten Bestätigungsfeldes der ermittelte Zahlenwert in das zuvor ausgewählte Parameterfeld übernommen wird. Es wird also durch die Auswahl eines Parameterfeldes, auf dem berührungsempfindlichen Bildschirm ein Fenster zur Eingabe eines oder mehrerer Zahlenwerte zur Ermittlung des Parameterwertes eingeblendet. In dieses Fenster können ein oder mehrere Zahlenwerte eingegeben und durch Auswahl einer oder mehrerer mathematischer Operationen verknüpft werden. Nach Erhalt des gewünschten Resultats, welches auch lediglich aus der Eingabe eines einzigen Zahlenwertes bestehen kann, wird durch die Betätigung eines bereitgestellten Bestätigungsfeldes der gerade angezeigte Zahlenwert in das Parameterfeld übernommen und entsprechend für die Ansteuerung der Aktoren zur Einstellung des Betriebsparameters durch das Terminal und/oder den Jobrechner verwendet. Auf diese Weise wird dem Benutzer eine besonders einfache und übersichtliche Möglichkeit zur Ermittlung des Parameterwertes gegeben, welche somit sehr zeitsparend und fehlerunanfällig ausgeführt ist. Wahlweise kann auch vorgesehen sein ein weiteres Betätigungsfeld bereitzustellen, um die eingegebenen Zahlenwerte zu verwerfen und den zuvor gespeicherten Parameterwert wieder aufzurufen.

Weitere Einzelheiten der Erfindung sind der Beispielsbeschreibung zu entnehmen. Die Zeichnungen zeigen
- Fig. 1: ein erfindungsgemäßes landtechnisches Maschinensystem und
- Fig. 2: ein Terminal eines erfindungsgemäßen landwirtschaftlichen Maschinensystems.

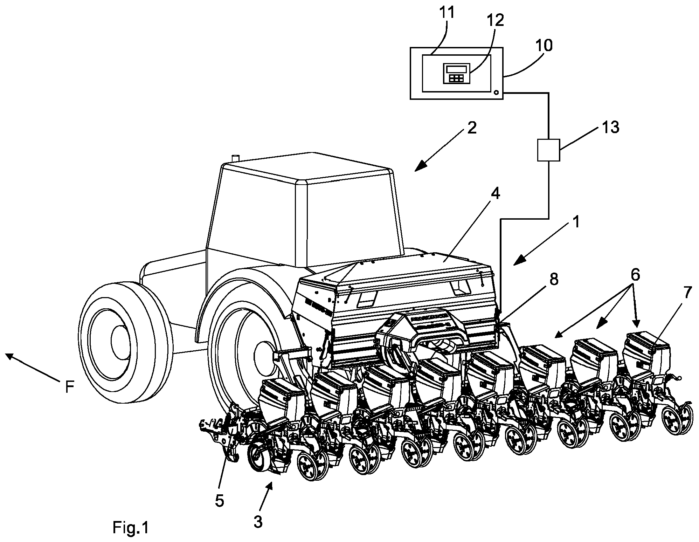

Ein erfindungsgemäßes landtechnisches Maschinensystem ist in Fig. 1 dargestellt. Diese zeigt eine Einzelkornsämaschine 1 als landtechnische Maschine, welche an einen Schlepper 2 angebaut ist und in Fahrtrichtung F über eine landwirtschaftliche Fläche bewegt wird. Die Einzelkornsämaschine 1 verfügt über einen Düngertank 4 sowie mehrere nebeneinander angeordnete Einzelkornsäaggregate 6, die über einen Rahmen an der Einzelkornsämaschine befestigt sind. Die Einzelkornsäaggregate 6 verfügen jeweils über einen Vorratsbehälter 7, in dem das auszubringende Saatgut bevorratet wird. Das Einbringen des Saatgutes erfolgt jeweils pro Säaggregat 6 mittels Scharanordnungen 3 in an sich bekannter Weise. Der Dünger aus dem Tank 4 wird volumetrisch dosiert und über nicht dargestellte Leitungen pneumatisch zu Scharanordnungen 5 befördert, wo der Dünger ebenfalls in an sich bekannter Weise in den Boden appliziert wird.

Die Dosierung des Düngers erfolgt typischerweise im unteren Bereich des Tanks mittels eines nicht dargestellten Dosierrades oder Dosierwelle oder Dosierschiebers. Die Drehzahl des Dosierrades bzw. der Dosierwelle und/oder die Schieberstellung des Dosierschiebers legt hierbei die Dosiermenge fest. Diese wird jeweils über einen Aktor 8 zum Antrieb des Dosierrades oder der Dosierwelle bzw. des Dosierschiebers eingestellt.

Die Menge des zu applizierenden Düngers wird vom Benutzer festgelegt und zwar üblicherweise als Ausbringmenge pro bearbeiteter Fläche. Diese Menge hängt von dem verwendeten Dünger und dem entsprechenden Anwendungsfall ab, bspw. dem verwendeten Saatgut und/oder dem Nährstoffbedarf des Bodens. Andererseits hängt die zu wählende Drehzahl von Dosierrad bzw. Dosierwelle und/oder Dosierschieber ab von dem verwendeten Dünger, bspw. dessen Korngröße und/oder Fließeigenschaften. Aus diesem Grund wird üblicherweise vor Beginn des Arbeitsprozesses eine Abdrehprobe durchgeführt, um zu ermitteln wieviel Dünger bei einer vorgegebenen Anzahl von Umdrehungen der Dosierwelle bzw. des Dosierrades und/oder bei einer vorgegebenen Dosierschieberstellung dosiert wird. Die Information der ermittelten Menge pro vorgegebener Anzahl von Umdrehungen bzw. pro Zeit eines geöffneten Dosierschiebers wird anschließend verwendet, um die Maschine einzustellen.

Beispielsweise kann es vorgesehen sein, in ein hier schematisch dargestelltes Terminal 10, welches üblicherweise in der Kabine des Schleppers 2 angeordnet ist, mittels eines berührungsempfindlichen Bildschirms 11 das Abdrehergebnis und die gewünschte Ausbringmenge einzugeben. Hierfür wird vorzugsweise in einem Menu ein entsprechendes Parameterfeld per Berührung ausgewählt, so dass sich eine Rechenmaske 12 öffnet. In diese kann nun das Abdrehergebnis A beispielsweise in der vorgegebenen Einheit g/Umdrehung eingegeben werden. Zudem ist vorgesehen die gewünschte Ausbringmenge B pro Fläche in g/ha einzugeben. Beispielsweise kann dies durch eine Division B/A erfolgen, so dass das Ergebnis die Anzahl der Umdrehungen der Dosierwelle pro überfahrener Fläche in Umdrehungen/ha angibt. Die für die Division notwendige Rechenoperation lässt sich ebenfalls in der Rechenmaske 12 auswählen. Da für die Abdrehprobe zur genaueren Messung typischerweise über viele Umdrehungen der Dosierwelle/ des Dosierrades gemittelt wird, kann auch die dosierte Düngermasse und die Anzahl der Umdrehungen einzeln eingegeben und die nun für die Berechnung des Abdrehergebnisses A benötigte Division ebenfalls in der Rechenmaske 12 ausgewählt werden

Es kann weiter vorgesehen sein, eine gewünschte Fahrgeschwindigkeit C in km/h und eine gewählte Arbeitsbreite D in m anzugeben, so dass zusätzlich die in einer bestimmten Zeit befahrene Fläche mittels einer Rechenoperation 10/ (C*D) in ha/h berechnet werden kann. Es kann also mittels der vorgesehenen Rechenmaske 12, falls erforderlich für eine vorgegebene Arbeitsbreite D, eine vorgesehene Fahrgeschwindigkeit C und eine gewünschte Ausbringmenge B bei einem ermittelten Abdrehergebnis A mittels einer Rechenoperation B /A*10 /C /D die erforderliche Anzahl von Umdrehungen pro Stunde für den Arbeitsvorgang berechnet werden und durch das Terminal das ermittelte Ergebnis direkt zur Ansteuerung des Aktors, in diesem Fall des Antriebsmotors der Dosierwelle, verwendet werden. Hierfür wird das berechnete Ergebnis als Parameterwert beispielsweise mittels eines entsprechenden Tastendrucks übernommen und durch das Terminal gespeichert und/oder an einen schematisch dargestellten Jobrechner 13, welcher vorzugsweise an der Sämaschine angeordnet ist, übermittelt. Der Antriebsmotor der Dosierwelle wird entsprechend des ermittelten Parameterwertes bei der Feldarbeit zur Einstellung des Betriebsparameters angesteuert, also beispielsweise Umdrehungen/h. Ist die Arbeitsbreite der Sämaschine in dem Terminal hinterlegt und wird die Fahrgeschwindigkeit der Sämaschine mit einem entsprechenden Sensor ermittelt und der Antrieb der Dosierwelle an die derzeitige Geschwindigkeit angepasst, kann die Berücksichtigung der Werte C und D unter Umständen auch unterbleiben und der Betriebsparameter wäre in diesem Fall Umdrehungen/ha. In jedem Fall führt das erfindungsgemäße landwirtschaftliche Maschinensystem zu einer enormen Zeitersparnis für den Landwirt, da die Ermittlung der Einstellparameter zur Einstellung der vorgesehenen Betriebsparameter durch eine Rechenoperation zwischen verschiedensten Zahlenwerten ermittelt und das Ergebnis der Rechenoperation unmittelbar durch das Terminal und/oder den Jobrechner zur Ansteuerung von Aktoren 8 der landtechnischen Maschine 1 verwendet werden kann.

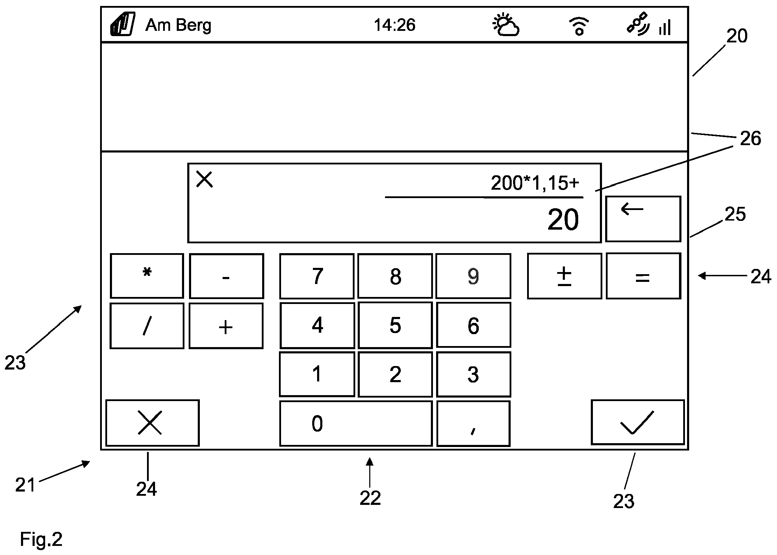

Eine Rechenmaske eines erfindungsgemäßen landwirtschaftlichen Maschinensystems ist in Fig. 2 dargestellt. Diese zeigt einen zweigeteilten Bildschirminhalt des Bildschirms 11 des Terminals 10. Im oberen Bereich ist die GPS-Ansicht 20 im Hintergrund dargestellt, welche üblicherweise die aktuelle Position des Maschinensystems auf der landwirtschaftlichen Fläche anzeigt, während im unteren Bereich eine Rechenmaske 21 zur Eingabe eines Parameterwertes dargestellt ist. Das Aufrufen dieser Rechenmaske 21 kann durch vorgehergehendes Betätigen einer virtuellen Schaltfläche, welche zum Ändern eines Betriebsparameters vorgesehen und auf dem Bildschirm 11 dargestellt ist, erfolgen. Die Rechenmaske 21 zeigt verschiedene Symbole, welche auch farblich unterschiedlich dargestellt sein können. So ist ein Ziffernfeld vorgesehen zur Eingabe von Zahlen, weiter sind mathematische Operatoren in einem Bereich 23 dargestellt zur Auswahl einer mathematischen Operation, hier beispielsweise Multiplikation, Division, Subtraktion und Addition. In einem anderen Bereich 24 sind weitere mathematische Operatoren dargestellt, um beispielsweise ein Ergebnis zu erzeugen und anzuzeigen oder das Ergebnis oder eine eingegebene Zahl zu negieren. Mittels der Schaltflächen 27 und 28 kann das jeweilige Ergebnis als Parameterwert für den betreffenden Betriebsparameter übernommen und gespeichert werden (Schaltfläche 27) oder verworfen werden (Schaltfläche 28). Anschließend wird die Rechenmaske geschlossen und die in diesem Fall beispielhaft in den Hintergrund getretene GPS-Ansicht 20 wird wieder im Vollbild dargestellt. Ebenfalls ist vorgesehen mittels einer weiteren Schaltfläche 25 fälschlicherweise eingegebene Zahlen oder mathematische Operationen löschen zu können. Die eingegebenen Zahlenwerte und mathematischen Operationen werden in einem Bereich 26 der Rechenmaske 21 angezeigt. Diese Anzeige 26 ist hier beispielhaft unterteilt in einen unteren Bereich, in welchem die gerade eingetippte Zahl angezeigt wird, und in einen oberen Bereich, in dem die bereits zuvor eingegebenen Zahlen und mathematischen Operationen angezeigt werden. Der Wechsel einer Zahl vom unteren in den oberen Bereich erfolgt hierbei jeweils nach antippen einer mathematischen Operation, welches die nun folgende Eingabe einer weiteren Zahl anzeigt. Nach dem Antippen der Ergebnisschaltfläche im Bereich 24 wird im unteren Bereich des Anzeigefeldes 26 das Ergebnis angezeigt, welches nun mittels einer Berührung der Schaltfläche 23 wahlweise übernommen, gespeichert und angewendet oder mittels einer Berührung der Schaltfläche 24 verworfen werden kann.

Das erfindungsgemäße landwirtschaftliche Maschinensystem erleichtert dem Bediener mittels der Bereitstellung der Rechenmaske 21 die Arbeit und führt zu einer beträchtlichen Zeitersparnis bei der Einstellung und Kalibrierung der jeweiligen landtechnischen Maschine 1, wobei das vorliegende Beispiel der Anwendung bei einer Einzelkornsämaschine nur beispielhaft zu sehen ist und die Erfindung auf eine Vielzahl von landtechnischen Maschinen, wie Feldspritzen, Sämaschinen, Düngerstreuern und Bodenbearbeitungsgeräten, bei denen Betriebsparameter elektronisch geregelt werden können, anwendbar ist. Insbesondere kann die Erfindung auch für die Kalibrierung von Sensoren verwendet werden, wenn die entsprechenden Sensorsignale zur Regelung von Betriebsparametern der landtechnischen Maschine verwendet werden.

## Patentansprüche

1. Landtechnisches Maschinensystem mit einem Terminal (10) zur Steuerung einer landtechnischen Maschine (1), wobei das Terminal (10) über einen berührungsempfindlichen Bildschirm (11) zur Eingabe von Parameterwerten zur Ermittlung von Betriebsparametern der landtechnischen Maschine (1) verfügt, wobei die landtechnische Maschine (1) über zumindest einen Aktor (8) zur Anpassung des Arbeitsergebnisses der landtechnischen Maschine (1) verfügt,
**dadurch gekennzeichnet, dass**
bei der Auswahl eines Parameterfeldes für die Eingabe eines Parameterwertes eine Rechenmaske (12, 21) auf dem Bildschirm des Terminals (10) eingeblendet wird, so dass das Terminal (10) den einzugebenden Parameterwert wahlweise mittels einer mathematischen Operation zwischen zwei oder mehr einzugebenden Zahlenwerten ermittelt und dass das Terminal (10) und/oder ein mit diesem verbundener Jobrechner (13) den zumindest einen Aktor (8) in Abhängigkeit des ermittelten Parameterwertes zur Einstellung von zumindest einem Betriebsparameter ansteuert.

2. Landtechnisches Maschinensystem nach Anspruch 1, **dadurch gekennzeichnet, dass** das Terminal (10) anhand des ermittelten Parameterwertes zumindest einen Sensor an der landtechnischen Maschine (1) kalibriert und das Terminal (10) und/oder der Jobrechner (13) in Reaktion auf die Messwerte des Sensors den zumindest einen Aktor (8) zur Einstellung von zumindest einem Betriebsparameter ansteuert.

3. Landtechnisches Maschinensystem nach Anspruch 1 oder 2, **dadurch gekennzeichnet, dass** durch eine Betätigung eines eingeblendeten Bestätigungsfeldes (23) der ermittelte Zahlenwert in das zuvor ausgewählte Parameterfeld übernommen wird.

4. Landtechnisches Maschinensystem nach zumindest einem der vorhergehenden Ansprüche, **dadurch gekennzeichnet, dass** zumindest ein Parameterfeld zur Eingabe einer durch die landtechnische Maschine (1) zu applizierenden Ausbringmenge und/oder Ausbringrate vorgesehen ist.
